Europäisches Patentamt

European Patent Office

Office européen des brevets

(11) Publication number: **0 139 174**
**B1**

(12) **EUROPEAN PATENT SPECIFICATION**

(45) Date of publication of patent specification: **02.03.88**

(21) Application number: **84110192.6**

(22) Date of filing: **27.08.84**

(51) Int. Cl.⁴: **H 04 N 1/00, G 03 G 15/00**

(54) **Image output apparatus.**

(30) Priority: **27.08.83 JP 158886/83**
**27.08.83 JP 158887/83**
**27.08.83 JP 158888/83**

(43) Date of publication of application:
**02.05.85 Bulletin 85/18**

(45) Publication of the grant of the patent:
**02.03.88 Bulletin 88/09**

(84) Designated Contracting States:
**DE FR GB NL**

(56) References cited:
**EP-A-0 047 180**
**DE-A-3 312 372**
**DE-A-3 318 303**
**US-A-3 465 096**

(73) Proprietor: **MITA INDUSTRIAL CO. LTD.**
**2-28, 1-chome, Tamatsukuri Higashi-ku**
**Osaka 540 (JP)**

(72) Inventor: **Hayashi, Kiyoshi**
**10-320, 10 Ban, 2 Chome Kosobe-cho**
**Takatsuki-city Osaka (JP)**
Inventor: **Kawahara, Yoshihiro**
**25-639, 7 Ban, 2 Chome Nishi-Iwata**
**Higashiosaka-city Osaka (JP)**

(74) Representative: **Patentanwälte TER MEER -**
**MÜLLER - STEINMEISTER**
**Mauerkircherstrasse 45**
**D-8000 München 80 (DE)**

Courier Press, Leamington Spa, England.

### Description

This invention relates to an image output apparatus as described in the preambles of independent claims 1 to 3. An image output apparatus of this kind is already known from EP—A2—47 180. This image output apparatus comprising:

—an image printing unit receiving a manuscript information input obtained on the basis of an original manuscript for printing of output images on paper fed from a paper feeding part,

—an image reading sensor for reading an image produced by said image output apparatus, and

—a comparison means for comparing information of said produced image with a reference information and for generating a signal in dependence of the result of said comparison.

Within said known image output apparatus a means for generating a test image on a photoreceptor, a scanner for scanning said test image, a means for comparing the signal produced by scanning said test image with a predetermined reference signal representing a desired operating level to provide a calibration signal for adjusting at least one component of the apparatus and a control means for adjusting said one component in response to said calibration signal are provided. However, it is not discussed within EP—A2—47 180 to compare an output image produced by said apparatus with an original manuscript information.

It is a main object of the invention to directly check output images themselves to discriminate whether the images are normal or abnormal to thereby obtain images of high quality.

Another object of the invention is to automatically check the quality of output images to carry out the image quality adjustment.

A first solution of the above object is characterized in that

—a means is provided for generating coded print data of the original manuscript,

—the image reading sensor is positioned to read the output image of the image output apparatus,

—said image reading sensor is combined with a means for generating output codes on the basis of signals transmitted from said image reading sensor, and

—the output codes and the coded print data are to be compared by said comparison means.

A second solution of the object is characterized in that

—a means is provided for calculating a first accumulation value of images on the original manuscript from picture element density and from ratio data,

—the image reading sensor is positioned to read the output image of the image output apparatus,

—said image reading sensor is combined with a means for generating a second accumulation value of images of an output image obtained from said image reading sensor, and

—the first and second accumulation values are to be compared by said comparison means.

Furthermore, a third solution of the above-mentioned objects is characterized in that

—a manuscript reading sensor for reading the original manuscript is provided for generating a first accumulation value of images on the original manuscript on the basis of the output signal of said manuscript reading sensor,

—the image reading sensor is positioned to read the output image of the image output apparatus,

—said image reading sensor is combined with a means for generating a second accumulation value of images of an output image obtained from said image reading sensor, and

—the first and the second accumulation values are to be compared by said comparison means.

Other objects and aspects of the invention will become apparent from the following description of an embodiment with reference to the accompanying drawings.

Fig. 1 is a block diagram of a first embodiment of an output apparatus of the invention,

Fig. 2 is a block diagram of a second embodiment of an output apparatus of the invention,

Fig. 3 is a side view of a third embodiment of the invention, and

Fig. 4 is a block diagram of an example of control circuit.

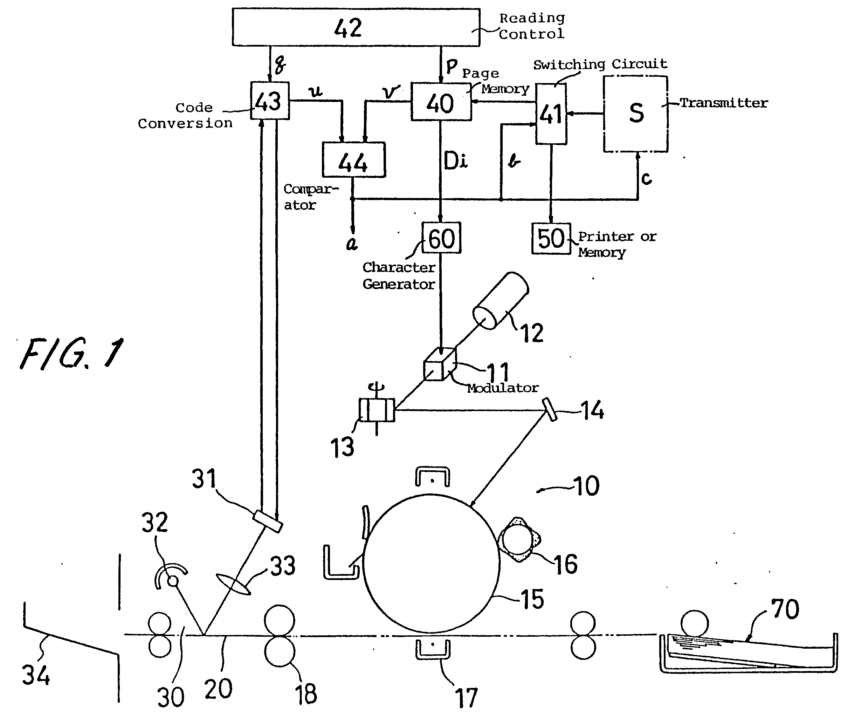

Fig. 1 is a block diagram of a first embodiment of an image output apparatus of the invention, which is applied to a laser printer. In Fig. 1, reference numeral 10 designates a printer (an example of image formation apparatus). Coded print data $D_I$ transmitted from a page memory 40 that will be described later is inputted into a modulator 11 through a character generator 60 when laser light from a laser tube 12 is suitably modulated and the modulated output from the modulator 11 is transmitted. This modulated output forms an electrostatic latent image on a drum-like photoreceptor 15 through a revolving mirror 13 and a reflecting mirror 14 so that an image output as predetermined may be obtained on the paper 20 transferred from the paper feeding device 70 by a developing device 16, transcription device 17, and fixing device 18, the mechanism being not different from that of ordinary laser printers.

The reference numeral 30 indicates a paper delivery part for delivering the paper 20 and, in proximity thereto, an image reading device 31 for sensing and reading output images formed on the paper 20 is located. This image reading device 31 is composed of, for example, CCD elements (CCD=Charge Coupled Device). Reference numerals 32, 33, and 34 indicate a light source, a lens, and a paper delivery tray, respectively.

A switching circuit 41 is provided on the input side of the page memory 40, through which signals of coded print data transmitted from the transmitting side S is inputted into the page memory 40. The page memory 40 stores up data $D_I$ in addressed order. The reference numeral 42 indicates a reading control circuit controlled by, for example, timing signals in the transfer system. Control signals P and q from the control circuit are inputted into the page memory 40 and a code conversion circuit 43. The code conversion circuit 43 actuates the image reading device 31 on the basis of the above said control signal q and converts read-out output transmitted from the reading device 31 into codes for outputting a read-out output code u. The reference character v represents a character code read from the page memory 40 on the basis of the control signal P. The reference numeral 44 indicates a comparator circuit to which the above said read-out code u and character code v are inputted. The numeral 50 denotes another memory circuit or another printer device.

The performance following the transfer of signals of print data $D_l$ from the transmitting side S will be described now:

Print data $D_l$ are stored in the page memory 40 in addressed order, transmitted in turn from the page memory 40 to the modulator 11 through the character generator 60, and outputted as images on the paper 20 by means of an ordinary printing process. When the paper 20 reaches a predetermined position of the paper delivery part 30, a timing signal in the transfer system is inputted into the reading control circuit 42, whereby control signals P and q are supplied as an output from the control circuit 42.

The page memory 40 that has received a control signal P outputs the character code v as a foremost address stored therewithin to the comparator circuit 44.

On the other hand, the code conversion circuit 43 that has received the control signal q actuates the image reading device 31 for reading-out of output images formed on the paper 20 located at the paper delivery part 30, converts read-out output into codes, and inputs read-out output codes u into the comparator circuit 44.

The comparator circuit 44 compares the above said character code v with the read-out output code u and examines whether or not both codes are identical with each other. Subsequently, images contained in one page are examined one by one in the same way as described above.

When a discrepancy between both codes or a discrepancy exceeding a certain allowable value is observed from the result of comparison, the operation such as printing is stopped or a warning is given via display of a stop indication a. When the operation stop is impossible to carry out, changeover instruction b is issued simultaneously with the stopping of the output for performing changeover control via the switching circuit 41 and, while adapting the other memory or printer 50 to operate, data are adapted to be stored in the other memory or outputted by the other printer. Along with these operations, a warning signal c is fed back to the transmitting side S for stopping or re-transmitting of signals of print data. According to the present invention, outputted images are read by an image reading device and read-out output codes obtained from the read-out output are compared with codes of print data, thereby enabling sure check of quality of images printed on the paper. Differently from conventional methods of check, exact observation of whether the image quality is normal or abnormal is assured because this method checks the image itself.

It is a matter of course that the present invention is effective for operation with attendant, feeding of the paper to the sorter, automatic sealing, or delivery of the paper with the face thereof directed downside to say nothing of operation at night or non-attended operation.

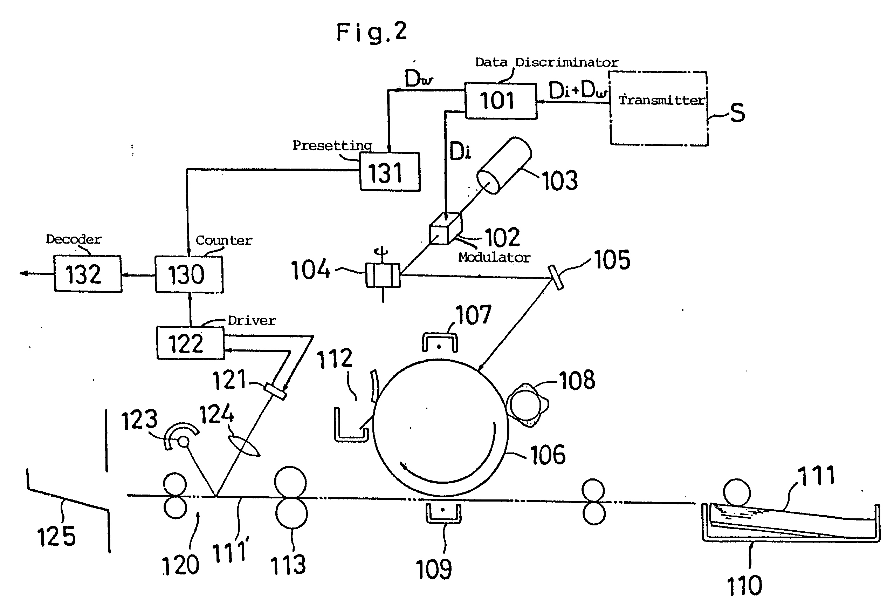

Fig. 2 is a block diagram of a second embodiment of the invention, which is applied similarly to a laser printer.

In Fig. 2, the reference numeral 101 indicating a data discrimination circuit for discriminating and separating pint data $D_l$ from ratio data $D_w$ which are inputted thereinto after transmission from the transmitting side S.

A term "ratio data $D_w$" means a ratio of black dots against the total dots on one page of the manuscript (document), and, from the ratio data $D_w$ and picture element density, an accumulation value of images on the manuscript can be calculated. The reference numeral 102 designates a modulator which suitably modulates laser light impinging from a laser tube 103 by means of the above said print data $D_l$ and supplies a modulated output that forms electrostatic latent images on the drum-like photoreceptor 106 through a revolving mirror 104 and a reflecting mirror 105. The numerals 107 and 108 indicate a charging device and a developing device, respectively. The reference numeral 109 indicates a transfer device for transfer of toner images produced on the photoreceptor 106 onto the paper 111 when the paper 111 fed from the paper feeding device 110 synchronously with the rotation of photoreceptor 106 reaches a transfer point. The numeral 112 refers to a cleaning device for scraping residual toner off the photoreceptor 106 after transfer.

The numeral 113 indicates a fixing device by which the toner images transferred on the paper by the transfer device 109 is fixed and fed to the paper delivery part 120.

An arrangement described above is not different from that of laser printers generally used in any respect.

A reading sensor 121 for sensing picture elements on the image-printed paper 111' is provided near the paper delivery part 120 which is composed of, for example, CCD elements and actuated by a driver 122 controlled by timing signal in the transfer system. The reference numerals 123, 124, and 125 indicate a light source, a lens, and a paper delivery tray, respectively.

Numeral 130 indicates a counter, for example, a down counter. Numeral 131 stands for a presetting circuit to set a predetermined value on the counter 130 on the basis of data $D_w$ of image ratio as another output emited from the data descriminating circuit 101. Numeral 132 represents a decoder to decode the output from the counter 130.

In the following, the performance or system operation will be described when data are transmitted from the transmitting side S.

When data consisting of print data $D_l$ and ratio data $D_w$ are transmitted from the transmitting side S and inputted into the data discrimination circuit 101 of the laser printer on the transmitting side, the data discrimination circuit 101 discriminates and separates both data $D_l$ and $D_w$ for individual outputting. The print data $D_l$ is subjected to an ordinary printing process and images are printed on the paper 111. Then the paper 111' carrying printed images is forwarded to the paper delivery part 120.

On the other hand, ratio data $D_w$ is inputted into the presetting circuit 131 in which an accumulation value of images on the manuscript is calculated from ratio data and the picture element density, and is displayed in terms of binary digit and supplied as a set value to the counter 130. In this case, on the assumption that an error is allowed and an accumulation value of images on the manuscript are $a$ and $x$, respectively, a set value can be expressed as $(x+a)$.

When the paper 111' reaches a position near the paper delivery part 120, the driver 122 is controlled by a timing signal emitted from the transfer system and the reading sensor 121 starts the reading of picture elements on the paper 111'. The output therefrom is supplied as down clock to the counter 130. Then, the counter starts down-counting from the above said set value $(x+a)$ and continues its counting operation until the end of reading of the paper 111' is reached.

When the printout on the paper 111' is correct, the final value $\beta$ at the end of down-counting must be equal to the allowed error.

If the final value $\beta$ is not equal to the allowed error $a$ at the end of the down-counting, the state of output on the paper 111' is checked by means of the decoder 132 and an instruction for "re-transmission" or a "warning" is issued and transferred to the transmitting side S.

In this way, the operator on the transmitting side S can check the output at the receiving side.

However, a complete agreement of the final value $\beta$ with the allowed error $a$ is ideal and, therefore, the purpose will be fulfilled by setting a certain allowance and adapting the structure to issue "re-transmission" or "warning" instruction when the discrepancy between both values exceeds the allowance.

Since the invention is adapted to compare an accumulation value of images on the manuscript obtained from ratio data and the picture element density with the accumulation value of output images, when abnormalities occur in the images on the paper, the abnormalities can be immediately detected to feedback the detection results to the transmitting side, thereby always obtaining output images of high quality.

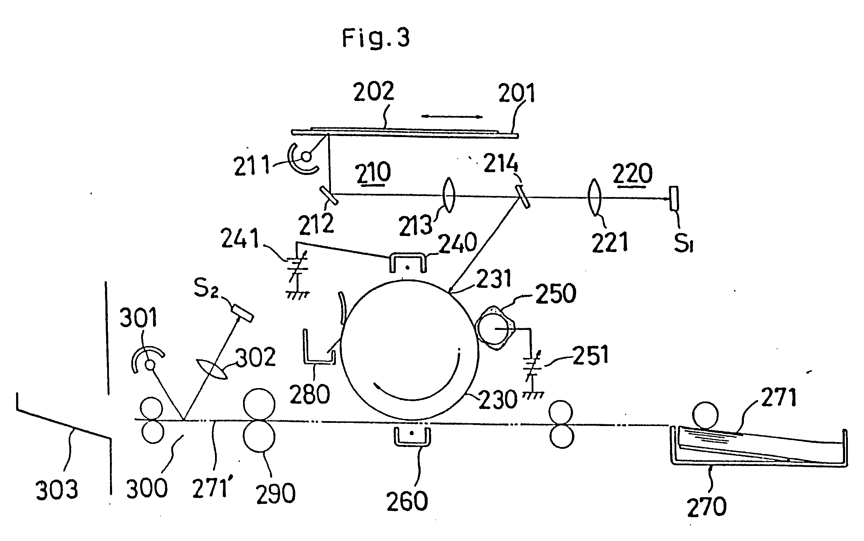

Next, Fig. 3 is a side view of a third embodiment of the invention, in which an image output apparatus shown is an electrostatic photographic copying machine.

In Fig. 3, the reference numeral 201 indicates a glass plate for moving the manuscript 202 in the horizontal direction as shown by an arrow mark.

The numeral 210 indicates a light-exposed optical system provided under the glass plate 201 and comprising a light source 211, a reflecting mirror 212, a lens 213, and a half-mirror 214, the structure being such that the ray of light reflected by the half-mirror 214 reaches a light-exposed part 231 of a photoreceptor 230 for forming electrostatic latent images thereon.

Numeral 220 indicates an optical system furcating from the light-exposed optical system 210 and consisting of a lens 221 for imaging the light passing the half-mirror 214 on a first reading sensor $S_1$ disposed on the imaging face of the above said lens 221 and composed of, for example, CCD elements. This first reading sensor $S_1$ serves for sensing dots (picture elements) which are image sections on the manuscript 202.

The photoreceptor 230 rotates in the direction, for example, as indicated by an arrow mark, in which a charging device 240 is provided on the preliminary operation side of the light-exposed part 231 as well as a developing device 250 on the finishing operation side. The numerals 241 and 251 indicate an electric charging source and a bias power source, respectively.

Numeral 260 represents a transferring device for transferring toner images formed on the photoreceptor 230 onto the paper 271 when this paper fed from the paper feeding device 270 synchronously with the rotation of the photoreceptor 230 reaches a transfer position; the numeral 280 denotes a cleaning device for scraping residual toner off the photoreceptor 230. These devices 240, 250, 260, and 280 are disposed around the photoreceptor 230.

By a fixing device 290 toner images transferred onto the paper by the above said transfer device 260 are fixed and fed to the paper delivery part 300.

In proximity of the paper delivery part 300 second reading sensor $S_2$ is provided comprising a CCD of the same type as the first reading sensor $S_1$ and for detecting dots (picture elements) on the paper 271'. Reference numeral 301 designates a light source, 302 designates a lens, and 303 designates a paper delivery tray.

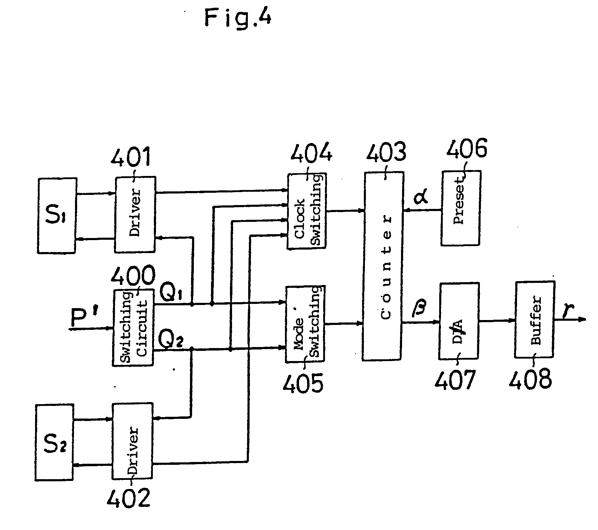

Fig. 4 is a block diagram showing an example of structure of a control circuit in the electrostatic photographic copying machine fabricated as above.

Numerals 401 and 402 indicate a first driver to actuate the first reading sensor $S_1$ and a second driver to actuate the second reading sensor $S_2$, respectively, both drivers 401 and 402 being controlled by a switching circuit 400 which transmits any of outputs $Q_1$ and $Q_2$ upon receipt of an extraneous timing signal P' from, for example, the switch in the paper carrying system.

The numeral 403 denotes a counter, for example, an updown counter in which switching control is performed for up-counting and down-counting by means of a clock switching circuit 404 and a mode switching circuit 405.

Numeral 406 designates a presetting switch for setting an initial value on the counter 403. Numerals 407 and 408 indicate a D/A converter and a buffer, respectively.

The performance conducted when the contents of manuscript are inputted will be described.

1. A set value α is entered into the counter 403 by means of the presetting switch 406. For example, this value is set at 1 million bits for copying of the manuscript in the size of A4 (JIS).

2. After placing the manuscript 202 on the glass plate table 201 and upon start of light exposure an output $Q_1$ from the switching circuit 400 is turned to be "active" by the extraneous timing signal P, and the first reading sensor $S_1$ is actuated by the first driver 401. At the same time, the clock switching circuit 404 and the mode switching circuit 405 are turned to up-counting mode by the output $Q_1$.

3. When the movement of the glass plate 201 reflected light from the manuscript 202 passes the light-exposed optical system 210 and forms electrostatic latent images on the light-exposed part 231 of the photoreceptor 230, and, on the other hand, the light passing the half-mirror 214 impinges onto the first reading sensor provided on the imaging face of the optical system 220 furcating from the light-exposed optical system 210.

Read output from the above said first reading sensor $S_1$ as a clock signal for up-counting is inputted into the counter 403 which starts and continues up-counting from the above said set value α to the end of reading of the manuscript and keeps a counted value (α+μ) (μ: accumulation value of the number of dots of images on the manuscript) as the final steps of operation. The above said electrostatic latent images are developed by the developing device 250, and transferred on the paper 271 by the transferring device 260.

The transferred paper 271' is forwarded to the fixing device 290 and carried to the paper delivery part 300 and outputted on the paper delivery tray 303.

4. When the paper 271' reaches a predetermined position on the paper delivery part 300, output $Q_2$ from the switching circuit 400 is turned to be "active" by the extraneous timing signal P (output $Q_1$ returns to the initial state), and the second reading sensor $S_2$ is actuated by the second driver 402.

At the same time, the clock switching circuit 404 and the mode switching circuit 405 are changed over to the down counting mode by the above said output $Q_2$.

5. When the light reflecting from the paper 271' is inputted into the second reading sensor $S_2$, read output at the sensor $S_2$ is adapted to be a clock signal for down-counting and inputted into the counter 403 which starts and continues down-counting from the above said counted value (α+μ) to the end of reading of the paper 271'.

6. When the reading of the paper 271' is satisfactorily finished, the final value β must be equal to the initial set value α.

7. If the final value β is not equal to the set value α, the D/A converter 407 applies D/A conversion to this final value β and issues a control instruction γ through the buffer 408.

According to this control instruction γ, bias voltage in the developing device 250, charge voltage in the charging device 240, and voltage in the light source are adjusted to minimize a difference between the final value β and the set value α for quality adjustment which assures of a satisfactory copy.

However, a complete agreement of the final value β with the set value α is ideal and, therefore, the purpose is fulfilled by setting an allowance and control instruction issued when a discrepancy between both values exceeds the allowance.

In the above embodiment, an up-down counter is employed as the counter 403 however, respective exclusive counters for the first and second reading sensor $S_1$ and $S_2$ may be provided for comparing the two calculations.

When using CCD elements as reading sensors and values of outputs therefrom, mean values are adopted as respective outputs and, therefore, threshold values for discriminating black color from white are preferably set beforehand by the drivers 401 and 402.

In the example described above, the first reading sensor is provided in the optical system 220 furcating from the light-exposed optical system, however, may be provided in an optical system exclusive for the first reading sensor $S_1$.

As detailed in the above, this invention is provided at the image output apparatus, such as an electrostatic photographic copying machine, with the manuscript reading sensor reading the manuscript information so that accumulation value of images on the manuscript obtained on the basis of the manuscript reading sensor is compared with an accumulation value of outputted images from the image reading sensor for carrying out the image quality adjustment. Hence, the image quality can automatically be checked and a copy of high quality is always obtainable.

**Claims**

1. An image output apparatus comprising:
—an image printing unit receiving a manuscript information input obtained on the basis of an original manuscript for printing of output images on paper fed from a paper feeding part,
—an image reading sensor for reading an image produced by said image output apparatus, and
—a comparison means for comparing information of said produced image with a reference information, characterized in that
—a means is provided for generating coded print data (v) of the original manuscript,
—the image reading sensor (31) is positioned to read the output image of the image output apparatus,
—said image reading sensor (31) is combined with a means (43) for generating output codes (u) on the basis of signals transmitted from said image reading sensor (31), and

—the output codes (u) and the coded print data (v) are to be compared by said comparison means (44).

2. An image output apparatus comprising:

—an image printing unit receiving a manuscript information input obtained on the basis of an original manuscript for printing of output images on paper fed from a paper feeding part,

—an image reading sensor for reading an image produced by said image output apparatus, and

—a comparison means for comparing information of said produced image with a reference information, characterized in that

—a means (131) is provided for calculating a first accumulation value of images on the original manuscript from picture element density and from ratio data ($D_w$),

—the image reading sensor (121) is positioned to read the output image of the image output apparatus,

—said image reading sensor (121) is combined with a means for generating a second accumulation value of images of an output image obtained from said image reading sensor (121), and

—the first and second accumulation values are to be compared by said comparison means (130).

3. An image output apparatus comprising:

—an image printing unit receiving a manuscript information input obtained on the basis of an original manuscript for printing of output images on paper fed from a paper feeding part,

—an image reading sensor for reading an image produced by said image output apparatus, and

—a comparison means for comparing information of said produced image with a reference information, characterized in that

—a manuscript reading sensor ($S_1$) for reading the original manuscript is provided for generating a first accumulation value of images on the original manuscript on the basis of the output signal of said manuscript reading sensor ($S_1$),

—the image reading sensor ($S_2$) is positioned to read the output image of the image output apparatus,

—said image reading sensor ($S_2$) is combined with a means for generating a second accumulation value of images of an output image obtained from said image reading sensor ($S_2$), and

—the first and the second accumulation values are to be compared by said comparison means (403).

**Patentansprüche**

1. Gerät für die Wiedergabe von Bildern, mit

—einer Druckeinheit, die mit von einem Originalmanuskript erstellter Information zum Ausdrucken von Bildern auf Papier gespeist wird, das von einer Papiervorlage aus zugeführt worden ist,

—einem Bildsensor zum Lesen eines durch das Bildwiedergabegerät erstellten Bildes und mit

—einer Vergleichseinrichtung zum Vergleich der Information des erstellten Bildes mit einer Referenzinformation,

dadurch gekennzeichnet, daß

—eine Einrichtung zur Erzeugung kodierter Druckdaten (v) des Originalmanuskripts vorhanden ist,

—der Bildsensor (31) so angeordnet ist, daß er das durch das Bildwiedergabegerät ausgegebene Bild lesen kann,

—der Bildsensor (31) mit einer Einrichtung (43) zur Erzeugung von Ausgangscodes (u) auf der Grundlage von Signallen, die ihr vom Bildsensor (31) übermittelt worden sind, kombiniert ist, und daß

—die Ausgangscodes (u) mit den kodierten Druckdaten (v) durch die Vergleichseinrichtung (44) verglichen werden.

2. Gerät für die Wiedergabe von Bildern, mit

—einer Druckeinheit, die mit von einem Originalmanuskript erstellter Information zum Ausdrucken von Bildern auf Papier gespeist wird, das von einer Papiervorlage aus zugeführt worden ist,

—einem Bildsensor zum Lesen eines durch das Bildwiedergabegerät erstellten Bildes und mit

—einer Vergleichseinrichtung zum Vergleich der Information des erstellten Bildes mit einer Referenzinformation,

dadurch gekennzeichnet, daß

—eine Einrichtung (131) zur Berechnung eines ersten Akkumulationswerts von Bildern auf dem Originalmanuskript aus einer Bildelementdichte sowie aus Verhältnisdaten ($D_w$) vorhanden ist,

—der Bildsensor (121) so angeordnet ist, daß er das durch das Bildwiedergabegerät ausgegebene Bild lesen kann,

—der Bildsensor (121) mit einer Einrichtung zur Erzeugung eines zweiten Akkumulationswerts von Bildern des durch das Bildwiedergabegerät ausgegebenen Bildes kombiniert ist, und

—der erste und zweite Akkumulationswert durch die Vergleichseinrichtung (130) miteinander verglichen werden.

3. Gerät für die Wiedergabe von Bildern, mit

—einer Druckeinheit, die mit von einem Originalmanuskript erstellter Information zum Ausdrucken von Bildern auf Papier gespeist wird, das von einer Papiervorlage aus zugeführt worden ist,

—einem Bildsensor zum Lesen eines durch das Bildwiedergabegerät erstellten Bildes und mit

—einer Vergleichseinrichtung zum Vergleich der Information des erstellten Bildes mit einer Referenzinformation,

dadurch gekennzeichnet, daß

—ein Manuskriptsensor ($S_1$) zum Lesen des Originalmanuskripts vorhanden ist, um einen ersten Akkumulationswert von Bildern auf dem Originalmanuskript auf der Grundlage des Ausgangssignals des Manuskriptsensors ($S_1$) zu erzeugen,

—der Bildsensor ($S_2$) so angeordnet ist, daß er das durch das Bildwiedergabegerät ausgegebene Bild lesen kann,

—der Bildsensor ($S_2$) mit einer Einrichtung zur Erzeugung eines zweiten Akkumulationswerts von Bildern des durch das Bildwiedergabegerät ausgegebenen Bildes kombiniert ist, und
—der erste und zweite Akkumulationswert durch die Vergleichseinrichtung (403) miteinander verglichen werden.

## Revendications

1. Dispositif de production d'images comprenant:

—une unité d'impression d'images recevant à l'entrée des informations manuscrites obtenues à partir d'un manuscrit original pour l'impression d'images de sortie sur du papier provenant d'un poste d'alimentation en papier,

—une tête de lecture d'images pour lire une image produite par ledit dispositif de production d'images, et

—un moyen de comparaison pour comparer les informations de ladite image produite avec des informations de référence, caractérisé en ce que

—un moyen est prévu pour produire des données d'impression codées (v) du manuscrit original,

—la tête de lecture (31) d'images est disposée pour lire l'image de sortie du dispositif de production d'images,

—ladite tête de lecture (31) d'images et combinée avec un moyen (43) pour produire des codes de sortie (u) à partir de signaux émis depuis la tête de lecture (31) d'images, et

—les codes de sortie (u) et les données d'impression codées (vi) doivent être comparées par ledit moyen de comparaison (44).

2. Dispositif de production d'images comprenant:

—une unité d'impression d'images recevant à l'entrée des informations manuscrites obtenues à partir d'un manuscrit original pour l'impression d'images de sortie sur du papier provenant d'un poste d'alimentation en papier,

—une tête de lecture d'images pour lire une image produite par ledit dispositif de production d'images, et ·

—un moyen de comparaison pour comparer les informations de ladite image produite avec des informations de référence, caractérisé en ce que

—un moyen (131) est prévu pour calculer une première totalisation d'images du manuscrit original à partir de la densité des éléments explorés et d'après des données ($D_w$) de rapports,

—la tête de lecture (121) d'images est placée pour lire l'image de sortie du dispositif de production d'images,

—la tête de lecture (121) d'images est combinée avec un moyen pour produire une seconde totalisation d'images d'une image de sortie obtenue de la tête de lecture (121) d'images, et

—les première et seconde totalisations doivent être comparées par ledit moyen de comparaison (130).

3. Dispositif de production d'images comprenant:

—une unité d'impression d'images recevant à l'entrée des informations manuscrites obtenues à partir d'un manuscrit original pour l'impression d'images de sortie sur du papier provenant d'un poste d'alimentation en papier,

—une tête de lecture d'images pour lire une image produite par ledit dispositif de production d'images, et

—un moyen de comparaison pour comparer les informations de ladite image produite avec des informations de référence, caractérisé en ce que

—une tête de lecture ($S_1$) de manuscrit pour explorer le manuscrit original est prévue pour produire une première totalisation d'images du manuscrit original à partir du signal de sortie de ladite tête de lecture ($S_1$) de manuscrit,

—la tête de lecture ($S_2$) d'images est placée pour explorer l'image de sortie du dispositif de production d'images,

ladite tête de lecture ($S_2$) d'images est combinée avec un moyen pour produire une seconde totalisation d'images d'une image de sortie obtenue de ladite tête de lecture ($S_2$) d'images, et

les première et seconde totalisations doivent être comparées par ledit moyen de comparaison (403).

FIG. 1

Reading Control
42

Code Conversion
43

Switching Circuit

Page Memory
40

Transmitter
S
41

Comparator
44

Di

Character Generator
60

Printer or Memory
50

12

Modulator
11

13

14

10

31

32

33

16

15

30

20

18

17

34

70

0 139 174

# Fig.2

Data Discriminator

Transmitter — S

$D_i + D_w$

$D_w$

101

Presetting

131

$D_i$

103

102
Modulator

104

105

Decoder

132

Counter

130

107

108

106

Driver

122

121

112

109

123 124

125

120 111' 113

111

110

0 139 174

2

Fig.3

Fig.4